# EUROPEAN PATENT APPLICATION

(11) **EP 3 849 060 A1**
(43) Date of publication of application: **14.07.2021**
(21) Application number: 20151186.2
(22) Date of filing: 10.01.2020
(51) Int. Cl.: H02K 5/02, G01K 11/12

(54) **A FRAME OF AN ELECTRIC MACHINE**

(71) Applicant: ABB Schweiz AG, 5400 Baden (CH)
(72) Inventor: Ikäheimo, Jouni, 65320 Vaasa (FI); Kolehmainen, Jere, 76410 Saint-Aubin-lès-Elbeuf (FR)
(74) Representative: Kolster Oy Ab

(57) **Abstract**

The frame (40) is made of a thermoplastic material, wherein a thermochromic material has been added to the thermoplastic material of the frame so that thermochromic material is present at least in a portion of the frame.

## Description

### FIELD

The invention relates to a frame of an electric machine.

### BACKGROUND

Electric machines i.e. electric motors and electric generators are used in many applications. Electric motors are used to drive different kinds of machines and electric generators are used to produce electric power.

An electric machine may comprise a rotating shaft, a rotor on the shaft, a stationary stator and a frame. The rotor may be provided with a rotor winding e.g. a squirrel cage or with permanent magnets. The stator may comprise a stator core with a stator winding.

The shaft may be supported via bearings on end plates, said end plates being attached to the frame.

Totally enclosed, non-conventional electric motors used in the food and beverage industry have traditionally had their frame made of stainless steel. Stainless steel has been used for hygiene purposes in order to ensure that the frame is easy to clean. Possible pockets where dirt may accumulate have also been removed from the frame.

Recently a new solution has been developed where the steel frame is replaced by a frame of thermoplastic. The thermal conductivity of thermoplastic is, however, much lower than the thermal conductivity for steel. This may result in a situation in which the temperature of the outer surface of the frame rises to a much higher value compared to the outer surface of a steel frame during the operation of the electric machine. This may be a safety issue as hot outer surface of the frame may give a burn to a service person touching the outer surface of the frame.

There is nothing which would warn the service person being in the vicinity of the electric machine that the outer surface of the frame is very hot.

The temperature of the frame has been measured with suitable temperature sensors, but this information is not available e.g. for a service person working in the vicinity of the electric machine. Also, in order to spot a problem e.g. overheated electric machine when the plat is running, the service person has to access the automation system of the plant. This might not be possible for the service person.

### SUMMARY

An object of the present invention is to achieve an improved frame of an electric machine.

The frame of an electric machine according to the invention is defined in claim 1.

The frame is made of a thermoplastic material, wherein a thermochromic material has been added to the thermoplastic material of the frame so that thermochromic material is present at least in a portion of the frame.

The addition of thermochromic material to the thermoplastic material will make it possible to make the electric machine to change colour as a function of the surface temperature of the frame of the electric machine.

The change of colour of the frame of the electric machine when the frame has reached a temperature causing burns to a person touching the frame will warn the user of a hot surface.

The change of colour of the frame of the electric machine when the frame has reached a certain temperature will also give a visual view of the loading of the electric machines in the plant to a service person.

The thermocromatic material may be added to the basic thermoplastic material during the melting process.

An alternative would be to pre-manufacture a part of the frame by adding thermochromic material to the thermoplastic material so that a warning text becomes visible when the electric machine is too hot. The thermochromic material would thus be added to the thermoplastic material in a pattern which forms he warning text.

Thermochromism is the property of substances to change colour due to a change in the temperature. There are commercial thermochromic materials that can be used in this application. E.g. thermochromatic liquid crystals are capable of displaying different colours at different temperatures. This change is dependent on selective reflection of certain wavelengths by the crystallic structure of the material, as it changes between the low-temperature crystallic phase, through anisotropic chiral or twisted nematic phase, to the high-temperature isotropic liquid phase. Only the nematic mesophase has thermochromatic properties.

### DRAWINGS

In the following the invention will be described in greater detail by means of preferred embodiments with reference to the attached drawings, in which
Figure 1 shows a side view of an electric machine,
Figure 2 shows an axonometric view of an electric machine.

### DETAILED DESCRIPTION

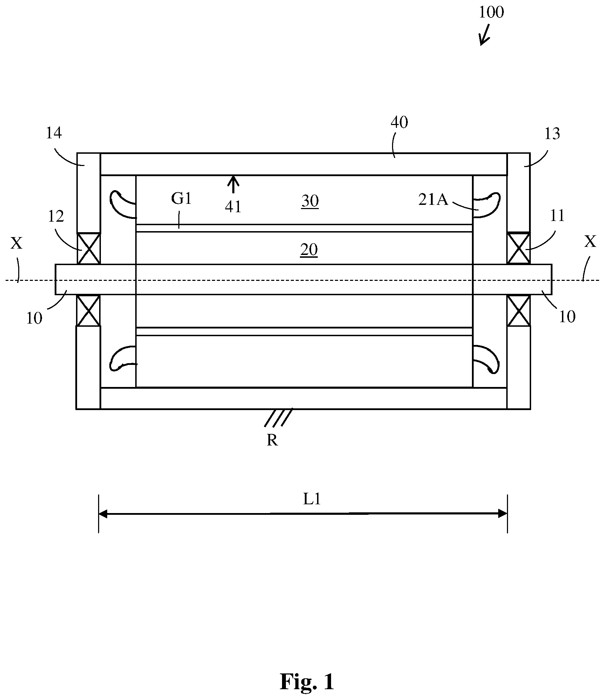

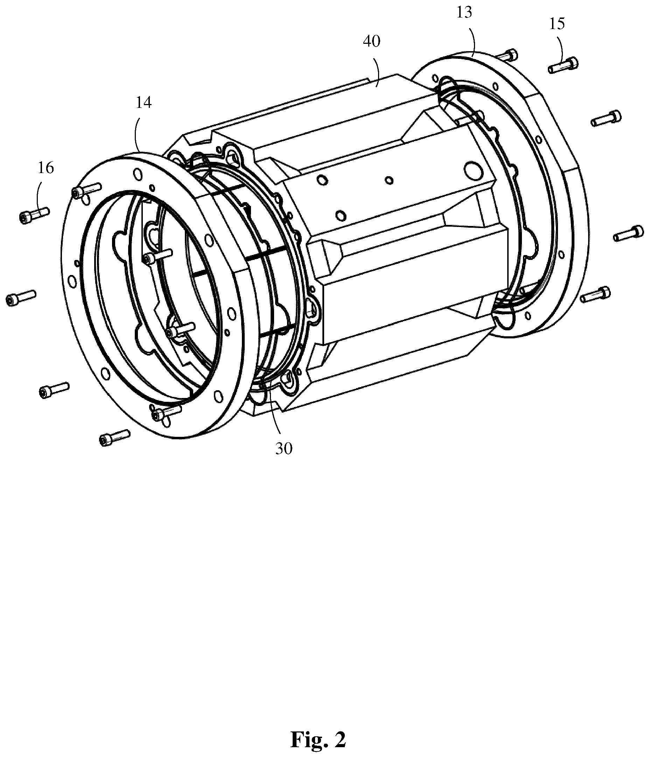

Fig. 1 shows a side view of an electric machine and figure 2 shows an axonometric view of an electric machine.

The electric machine 100 may comprise a longitudinal centre axis X-X, a shaft 10, a rotor 20 attached to a centre portion of the shaft 10, a stator 30 surrounding the rotor 20, and a frame 40 surrounding the stator 30. The rotor 20 and the stator 30 may have a cylindrical shape. The rotor 20 rotates within the stator 30 and the stator 30 is stationary.

Each end of the shaft 10 may be rotatably supported on a bearing 11, 12. Each bearing 11, 12 may be supported in a bearing house in a respective end plate 13, 14 of the electric machine 100. The end plates 13, 14 may be attached to a respective end of the frame 40.

The rotor 20 may be provided with a rotor winding (not shown in the figure).

The stator 30 may comprise a stator core surrounding the rotor 20. The stator 30 core may be provided with a stator winding. The figure shows only the winding ends 21A of the stator winding.

There is an air gap G1 between the outer surface of the rotor 20 and the inner surface of the stator 30.

The frame 40 may be supported on a support structure R at the installation site of the electric machine 100. The frame 40 may be supported on the support structure R through support feet attached to the outer surface of the frame 40 or through support feet attached to the end plates 13, 14. The support feet may be attached e.g. by welding to the frame 40 or to the end plates 13, 14.

The frame 40 may comprise a central bore 41 passing in an axial direction X-X through the frame 40. The central bore 41 may be adapted to receive a stator core 30.

The frame 40 has an axial length L1.

The frame 40 may be made of thermoplastic material.

The frame 40 may be casted or injection moulded on the stator 30.

A thermochromic material may further be added to the thermoplastic material of the frame 40 so that thermochromic material is present at least in a portion of the frame 40.

The addition of thermochromic material to the thermoplastic material makes it possible to make the electric machine to change colour as a function of the surface temperature of the frame 40 of the electric machine.

The end plates 13, 14 may be attached with fastening means 15, 16 e.g. screws to the frame 40. The screws 15, 16 may extend in the axial X-X direction through the end plates 13, 14 to the end of the frame 40.

The electric machine 100 can be an electric motor or an electric generator.

The electric machine may be totally closed so that air or liquid cannot pass into the electric machine and/or out from the electric machine.

The electric machine may be air cooled or liquid cooled. The cooling may be arranged in a closed circuit so that the electric machine remains totally closed.

It will be obvious to a person skilled in the art that, as the technology advances, the inventive concept can be implemented in various ways. The invention and its embodiments are not limited to the examples described above but may vary within the scope of the claims.

## Claims

1. A frame of an electric machine, the frame (40) being made of a thermoplastic material, wherein a thermochromic material has been added to the thermoplastic material of the frame (40) so that thermochromic material is present at least in a portion of the frame (40).

2. The frame according to claim 1, wherein thermochromic material is present in the whole frame (40).

3. The frame according to claim 1, wherein thermochromic material is present only in a portion of the frame (40).

4. The frame according to any of claims 1 to 3, wherein the thermochromic material is added to the thermoplastic material in the form of pigments.

5. The frame according to any of claims 1 to 3, wherein the thermochromic material is added to the thermoplastic material in the form of microcapsules.

6. The frame according to any of claims 1 to 5, wherein the frame (40) comprises a central bore (41) passing in an axial direction (X-X) through the frame (40), said central bore being adapted to receive a stator core (30).

7. An electric machine comprising a frame (40) according to any of claims 1 to 6.

8. The electric machine according to claim 7, wherein the electric machine comprises a rotor (20) and a stator (30) surrounding the rotor (20), the frame surrounding the stator (30).

9. The electric machine according to claim 8, wherein the rotor (20) and the stator (30) has a cylindrical shape.

10. A method for producing a frame of an electric machine, the method comprising
producing the frame (40) of thermoplastic material
adding thermochromic material to the thermoplastic material so that thermochromic material is present at least in a portion of the frame (40).

11. The method according to claim 10, wherein thermochromic material is present in the whole frame (40).

12. The method according to claim 10, wherein thermochromic material is present only in a portion of the frame (40).

13. The frame according to any of claims 10 to 12, wherein the thermochromic material is added to the thermoplastic material in the form of pigments.

14. The method according to any of claims 10 to 12, wherein the thermochromic material is added to the thermoplastic material in the form of microcapsules.
